# EUROPÄISCHE PATENTANMELDUNG

(11) **EP 1 796 363 A1**
(43) Veröffentlichungstag der Anmeldung: **13.06.2007**
(21) Anmeldenummer: 05027038.8
(22) Anmeldetag: 10.12.2005
(51) Int. Cl.: H04M 17/02

(54) **Verfahren zum Aufladen eines Telefonguthabens**

(71) Anmelder: CALLAX Telecom Holding GmbH, 40211 Düsseldorf (DE)
(72) Erfinder: Varol, Ömer Kaan, 40468 Düsseldorf (DE)
(74) Vertreter: Stenger, Watzke & Ring

(57) **Zusammenfassung**

Verfahren zum Aufladen eines Telefonguthabens, das folgende Schritte aufweist: Kundenseitiges Wählen einer vorbestimmten Rufnummer eines Verfahrensanbieters; verfahrensanbieterseitiges Identifizieren des Telefonanschlusses, von dem aus der Kunde anruft, verfahrensanbieterseitiges Identifizieren des Telefonanschlusses zumindest bei einem erstmaligen Anruf des Kunden beim Verfahrensanbieter; Auswahl eines aufzuladenden Betrags durch den Kunden; Abrechnen des ausgewählten Betrags über den Netzbetreiber des identifizierten Telefonanschlusses, wobei der Rechnungsbetrag dem Inhaber des Telefonanschlusses in Rechnung gestellt wird; und Bereitstellen des kundenseitig ausgewählten Betrags.

## Beschreibung

Die vorliegende Erfindung bezieht sich auf ein Verfahren zum Aufladen eines Telefonguthabens, insbesondere eines Guthabens, das einer Calling-Karte oder einer Prepaid-Karte zugeordnet ist.

Es sind derzeit verschiedene Arten von Telefonkarten bekannt, denen ein Telefonguthaben zugeordnet ist, das über ein Festnetz- und/oder Mobiltelefon abtelefoniert werden kann.

Calling-Karten sind beispielsweise Telefonkarten, mit denen ein Kunde im In- und Ausland bargeldlos sowohl von Festnetz- als auch von Mobiltelefonen telefonieren kann. Voraussetzung ist lediglich ein DTMF-fähiges (Dual-tone-multi-frequency) Telefon. Der von einem Verfahrensanbieter zur Verfügung gestellten Calling-Karte ist eine gebührenfreie Telefonnummer des Verfahrensanbieters zugeordnet. Der Kunde ruft diese Telefonnummer an und gibt anschließend eine persönliche Codenummer sowie die Rufnummer des gewünschten Gesprächsteilnehmers ein. Die eingegebene persönliche Codenummer wird verfahrensanbieterseitig überprüft. Bei korrekter Eingabe wird eine Verbindung zu dem gewünschten Gesprächsteilnehmer hergestellt, wobei die Abrechnung des Gesprächs durch den Verfahrensanbieter erfolgt. Jeder Calling-Karte bzw. jeder persönlichen Codenummer ist dazu meist ein beim Verfahrensanbieter eingerichtetes Kundenkonto zugeordnet, dessen Guthaben entsprechend der Gesprächsart und Gesprächsdauer reduziert wird. Ist das Guthaben der Calling-Karte aufgebraucht, so kann der Kunde eine neue Calling-Karte mit einer neuen persönlichen Codenummer an einem sogenannten Point of Sale erwerben, beispielsweise an Bahnhöfen, Tankstellen, in Mobilfunkgeschäften oder dergleichen. Alternativ kann ein neues Telefonguthaben via Internet erworben werden, wobei die Zahlung per Lastschrifteinzug, per Überweisung, per Kreditkarte oder dergleichen erfolgt. Dem Kunden wird dann eine neue Codenummer übermittelt, sobald die Zahlung erfolgt ist.

Prepaid-Karten sind vorausbezahlte Mobiltelefonkarten ohne Vertragsbindung, denen ein Telefonguthaben zugeordnet ist, das vom Nutzer abtelefoniert werden kann. Eine Prepaid-Karte wird in Form einer SIM-Karte (Subscriber Identity Module) ausgegeben, die zum Telefonieren in ein Mobiltelefon eingelegt wird. Nach Eingabe einer Codenummer ist das Mobiltelefon betriebsbereit. Bei jeder Benutzung wird ein entsprechender Betrag abgebucht, vergleichbar mit einer EC- oder einer herkömmlichen Telefonkarte. Ist das der Prepaid-Karte zugeordnete Telefonguthaben aufgebraucht, so muß dieses aufgeladen werden. Zum Aufladen sind verschiedene Verfahren bekannt. Beispielsweise kann die Prepaid-Karte durch Lastschrifteinzug vom Konto des Kunden, durch Abrechnung über die Kreditkarte des Kunden, unter Einbeziehung eines Bankautomaten, durch Einzahlung des Aufladebetrages auf ein spezielles Konto des Netzbetreibers durch den Kunden oder durch Erwerb eines bestimmten Nachladeguthabens am Point of Sale oder dergleichen aufgeladen werden. Nach dem Aufladen wird dem Kunden normalerweise eine neue Codenummer übermittelt, mit der er dann das Guthaben aktivieren kann. Die DE 100 55 299 schlägt beispielsweise ein Verfahren zum Aufladen eines Telefonguthabens einer Prepaid-Karte vor, bei dem sich der Kunde, der sein Telefonguthaben aufladen will, an ein Terminal des Verfahrensanbieters begibt. Dieses Terminal kann beim Händler stehen oder an sonstigen Plätzen aufgestellt sein. Dort bezahlt der Kunde mit Bargeld, Kreditkarte, EC-Karte oder einer sonstigen Geldkarte den gewünschten Aufladebetrag, woraufhin das Terminal eine Telefonverbindung mit einem Zentralrechner des Verfahrensanbieters aufbaut. Das Verbindungsverfahren, das im jeweiligen Fall angewandt wird, hängt hauptsächlich vom Standort des Terminals ab. Nachdem das Modem den gewünschten Aufladebetrag zum Zentralrechner des Verfahrensanbieters gesendet hat, schickt dieser eine Codenummer an das Terminal zurück. Das Terminal druckt über einen sogenannten Bondrucker die Codenummer für den Kunden aus, der diese Codenummer dann anschließend über seine Mo-biltelefontastatur eingeben kann, um das Guthaben auf seinem Konto zu aktivieren. Alternativ kann der Kunde nach dem Bezahlen auch seine Mobiltelefonnummer am Terminal eingeben und das bezahlte Guthaben direkt vom Hauptserver auf seinem Gesprächsguthabenkonto gutgeschrieben bekommen.

Die zuvor beschriebenen Verfahren zum Aufladen eines Telefonguthabens haben sich in der Vergangenheit bewährt. Ein Nachteil von Aufladeverfahren, die via Internet erfolgen, besteht allerdings darin, daß ein Internetanschluß vorhanden sein muß. Zum Aufladen des Telefonguthabens am Point of Sale oder an den oben genannten Terminals muß der Kunde einen Point of Sale beziehungsweise ein Terminal aufsuchen, was recht unbequem und lästig ist.

Es ist eine **Aufgabe** der vorliegenden Erfindung, ein alternatives Verfahren zum Aufladen eines Telefonguthabens zu schaffen.

Diese Aufgabe wird gemäß der vorliegenden Erfindung durch ein Verfahren nach Anspruch 1 **gelöst**. Die abhängigen Ansprüche beziehen sich auf individuelle Ausführungsformen des erfindungsgemäßen Verfahrens.

Bei dem erfindungsgemäßen Verfahren wird ein Telefonguthaben via Telefon aufgeladen, wobei die Abrechnung des aufzuladenen Betrags über den Netzbetreiber desjenigen Telefonanschlusses erfolgt, von dem aus ein Kunde den Verfahrensanbieter anruft. Verfahrensanbieter und Netzbetreiber können dabei identisch sein. Ist dies jedoch nicht der Fall, so erfolgt die Abrechnung über den Netzbetreiber im Auftrag des Verfahrensanbieters.

Zur Durchführung des erfindungsgemäßen Verfahrens zum Aufladen eines Telefonguthabens wählt ein Kunde zunächst eine vorbestimmte Rufnummer eines Verfahrensanbieters, über den er sein Telefonguthaben aufladen möchte. Sobald die Verbindung zwischen dem Kunden und dem Verfahrensanbieter hergestellt ist, wird der Telefonanschluß, von dem aus der Kunde anruft, verfahrensanbieterseitig identifiziert, da die spätere Abrechnung über den Netzbetreiber dieses Telefonanschlusses erfolgen soll. Die Identifizierung kann beispielsweise anhand der Rufnummer des Telefonanschlusses erfolgen, die an den Verfahrensanbieter übermittelt wird. Der identifizierte Telefonanschluß wird daraufhin vom Verfahrensanbieter überprüft. Ist beispielsweise eine Abrechnung nur über bestimmte Netzbetreiber möglich, so kann zunächst überprüft werden, ob der Telefonanschluß, von dem aus der Kunde anruft, von einem Netzbetreiber bereitgestellt wird, über den eine Abrechnung erfolgen kann. Ist dies nicht der Fall, so wird der Kunde beispielsweise entsprechend unterrichtet und die Telefonverbindung verfahrensanbieterseitig abgebrochen. Kann hingegen eine Abrechnung über den Netzbetreiber des identifizierten Telefonanschlusses erfolgen, so wird das erfindungsgemäße Verfahren fortgesetzt. Ferner kann beispielsweise überprüft werden, ob der Inhaber des identifizierten Telefonanschlusses zahlungsfähig ist. Eine solche Überprüfung kann durch eine Abfrage einer oder mehrerer geeigneter Datenbanken erfolgen, wie beispielsweise eine Datenbank des Verfahrensanbieters, eine Datenbank des oben genannten Netzbetreibers, auf die der Verfahrensanbieter Zugriff hat, die Schufa-Datenbank oder dergleichen. Wird bei der Überprüfung festgestellt, daß der Inhaber des identifizierten Telefonanschlusses zahlungsunfähig ist, so kann der anrufende Kunde hiervon unterrichtet und die Telefonverbindung verfahrensanbieterseitig abgebrochen werden. Erweist sich der Inhaber des identifizierten Telefonanschlusses hingegen als zahlungsfähig, so wird das erfindungsgemäße Verfahren fortgesetzt. Der Kunde kann nunmehr einen Betrag auswählen, der seinem Telefonguthaben gutgeschrieben werden soll. Der Betrag kann dabei vom Kunden frei wählbar sein. Alternativ können dem Kunden verfahrensanbieterseitig auch eine Anzahl von unterschiedlichen Beträgen vorgegeben werden, aus der der Kunde dann einen Betrag auswählen kann. Vorzugsweise muß der ausgewählte Betrag kundenseitig noch bestätigt werden. Dieser wird dann dem Inhaber des identifizierten Telefonanschlusses in Rechnung gestellt, wobei die Abrechnung des erfindungsgemäßen Verfahrens normalerweise zusammen mit der Abrechnung der Telefongespräche erfolgt, die über den Telefonanschluß geführt wurden. Der kundenseitig ausgewählte Betrag wird schließlich vom Verfahrensanbieter bereitgestellt. Soll mit dem erfindungsgemäßen Verfahren beispielsweise eine Calling-Karte eines Kunden aufgeladen werden, so wird dem Kunden bevorzugt eine Codenummer übermittelt, mit der er den ausgewählten Betrag freischalten kann. Auch beim Aufladen einer Prepaid-Karte ist eine Freischaltung über eine Codenummer möglich. Alternativ kann der ausgewählte Betrag aber auch einem beim Verfahrensanbieter eingerichteten, einer bestimmten Prepaid-Karte zugeordneten Prepaid-Konto gutgeschrieben werden, über das über die Prepaid-Karte getätigte Anrufe automatisch abgerechnet werden. In diesem Fall ist es erforderlich, daß der Kunde sein Kundenkonto in irgend einer Art und Weise gegenüber dem Verfahrensanbieter identifiziert, so daß der kundenseitig ausgewählte Betrag dem richtigen Prepaid-Konto zugeordnet werden kann.

Zur Durchführung des erfindungsgemäßen Verfahrens ist es nicht erforderlich, daß der Kunde Zugriff auf einen Internetzugang hat. Der Kunde muß auch keinen Point of Sale oder Terminal aufsuchen, um sein Telefonguthaben beim Verfahrensanbieter aufzuladen. Er braucht lediglich einen Telefonanschluß, der heutzutage in fast jedem Haushalt aufzufinden ist. Das erfindungsgemäße Verfahren ist entsprechend bequem und einfach durchführbar.

Gemäß einer bevorzugten Ausführungsform werden der identifizierte Telefonanschluß und das Überprüfungsergebnis einander zugeordnet und diese Zuordnung in einer entsprechenden Datenbank des Verfahrensanbieters gespeichert. Gegebenenfalls wird auch das vom Kunden identifizierte Prepaid-Konto gespeichert. Auf diese Weise ist es möglich, in Abhängigkeit vom Überprüfungsergebnis zukünftig auf die Überprüfung bestimmter Telefonanschlüsse zu verzichten oder aber bestimmte Telefonanschlüsse vom erfindungsgemäßen Verfahren zumindest temporär auszuschließen. Hat beispielsweise die Überprüfung ergeben, daß der Inhaber des identifizierten Telefonanschlusses zahlungsfähig ist, so kann verfahrensanbieterseitig von einer erneuten Überprüfung beim nächsten Anruf, bei dem dieser Telefonanschluß identifiziert wird, abgesehen werden, wodurch Zeit und Kosten zur Durchführung des Verfahrens eingespart werden. Eine erneute Überprüfung findet in diesem Fall nur dann statt, wenn Abrechnungsprobleme aufgetreten sind, also beispielsweise eine Rechnung nicht beglichen wurde. Hat die Überprüfung hingegen ergeben, daß der Inhaber des identifizierten Telefonanschlusses zahlungsunfähig oder zahlungsunwillig ist, so kann dieser zumindest temporär vom erfindungsgemäßen Verfahren ausgeschlossen werden. Wird ein solcher Telefonanschluß dann bei zukünftigen Anrufen identifiziert, so kann die Verbindung verfahrensanbieterseitig sofort unterbrochen werden, ggf. unter Angabe von Gründen.

Ferner werden bevorzugt Rufnummernblöcke des verfahrensanbieterseitig identifizierten Telefonanschlusses identifiziert und gespeichert. Auf diese Weise können beispielsweise Telefonanschlüsse mit mehreren Durchwahlen, wie sie häufig in Bürohäusern üblich sind, erfaßt werden.

Die Höhe des pro Anruf aufladbaren Betrags und/oder des über eine vorbestimmte Zeitspanne von einem identifizierten Telefonanschluß aufladbaren Betrags kann verfahrensanbieter- und/oder kundenseitig begrenzbar sein. Auf diese Weise kann ein Mißbrauch des erfindungsgemäßen Verfahrens zumindest eingeschränkt werden.

Auch kann ein identifizierter Telefonanschluß nach einer vorbestimmten Anzahl von nicht erfolgten Buchungen zeitweise oder ganz von der Durchführung des erfindungsgemäßen Verfahrens ausgeschlossen werden. Eine Buchung findet beispielsweise dann nicht statt, wenn kundenseitig kein Betrag ausgewählt wird, ein kundenseitig ausgewählter Betrag nicht bestätigt wird oder wenn die Verbindung kundenseitig abgebrochen wird, bevor das erfindungsgemäße Verfahren vollständig durchgeführt werden konnte. Stellt der Verfahrensanbieter fest, daß von einem identifizierten Telefonanschluß zwar mehrmals angerufen wurde, wodurch ihm Kosten entstanden sind, jedoch nie eine Buchung erfolgt ist, so ist davon auszugehen, daß der Anrufende den Verfahrensanbieter schädigen will, was durch einen Ausschluß des identifizierten Telefonanschlusses von dem erfindungsgemäßen Verfahren zukünftig verhindert werden kann.

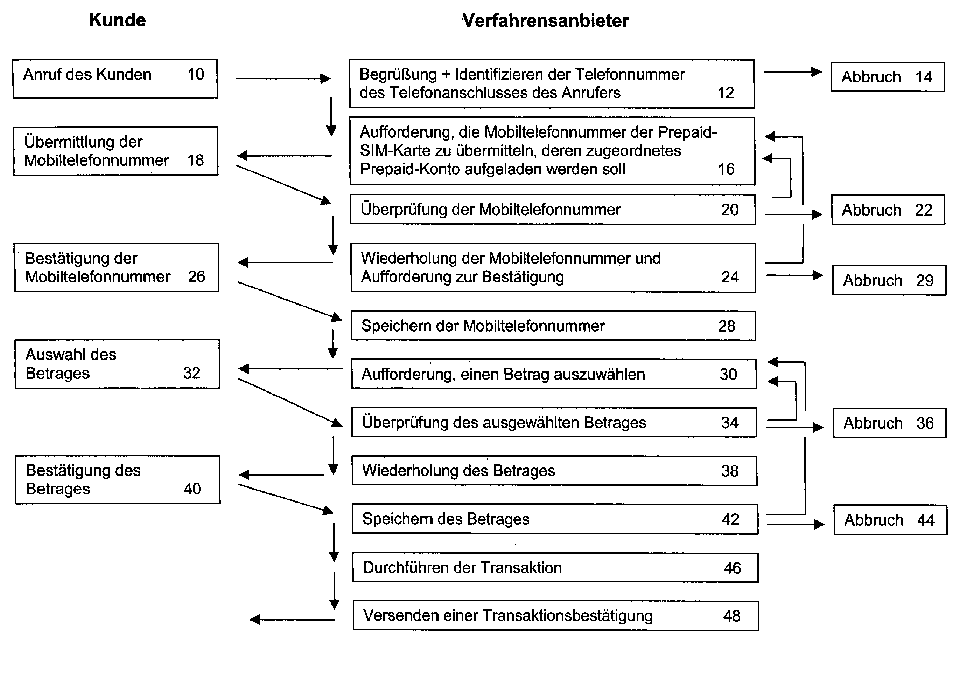

Nachfolgend wird die vorliegende Erfindung anhand einer beispielhaften Ausführungsform des erfindungsgemäßen Verfahrens unter Bezugnahme auf die Zeichnung genauer beschrieben. Die Zeichnung zeigt ein Flußdiagramm eines Verfahrens, das zum Aufladen eines einer bestimmten Prepaid-SIM-Karte zugeordneten Prepaid-Telefonguthabenkontos dient, das beim Verfahrensanbieter eingerichtet ist.

Wie aus dem Flußdiagramm hervorgeht, wird die dargestellte Ausführungsform durch einen Anruf des Kunden beim Verfahrensanbieter eingeleitet (Schritt 10). Daraufhin erfolgt verfahrensanbieterseitig eine Begrüßung, wobei gleichzeitig der Telefonanschluß, von dem aus der Kunde anruft, identifiziert wird (Schritt 12), was beispielsweise anhand einer an den Verfahrensanbieter übertragenen Rufnummer erfolgen kann. Ist dieser identifizierte Telefonanschluß beispielsweise aufgrund irgendwelcher negativen Erfahrungen in der Vergangenheit auf einer sogenannten "schwarzen Liste" gespeichert, so wird die Telefonverbindung automatisch abgebrochen (Schritt 14), was bevorzugt unter Angaben von Gründen erfolgt. Bestehen keine Probleme bezüglich des identifizierten Telefonanschlusses, so wird der Kunde verfahrensanbieterseitig aufgefordert, die Mobiltelefonnummer derjenigen Prepaid-SIM-Karte zu übermitteln, deren zugeordnetes Prepaid-Telefonguthabenkonto aufgeladen werden soll (Schritt 16). Daraufhin übermittelt der Kunde die gewünschte Mobiltelefonnummer an den Verfahrensanbieter (Schritt 18), was beispielsweise mittels einer Eingabe über die Tasten des Mobiltelefons, Spracheingabe oder dergleichen erfolgen kann. Diese übermittelte Mobiltelefonnummer wird dann vom Verfahrensanbieter überprüft (Schritt 20). Ist die Mobiltelefonnummer dem Verfahrensanbieter unbekannt, wird erneut Schritt 16 durchgeführt, indem der Kunde abermals aufgefordert wird, die Mobiltelefonnummer durchzugeben, was unter Angabe eines entsprechenden Grundes erfolgen kann, beispielsweise unter Angabe der Tatsache, daß die kundenseitig übermittelte Mobiltelefonnummer nicht ausreichend Ziffern habe, daß sie dem Verfahrensanbieter unbekannt sei oder dergleichen. Diese Schleife kann mehrmals wiederholt werden, bevor ein Abbruch der Telefonverbindung erfolgt (Schritt 22), wobei wieder bevorzugt die entsprechenden Gründe angegeben werden.

Ergibt die Überprüfung in Schritt 20, daß gegen die durch den Kunden in Schritt 18 übermittelte Mobiltelefonnummer verfahrensanbieterseitig keine Einwände bestehen, so wird die Mobiltelefonnummer verfahrensanbieterseitig für den Kunden wiederholt (Schritt 24). Ist die in Schritt 24 wiederholte Mobiltelefonnummer korrekt, so wird sie kundenseitig bestätigt (Schritt 26) und anschließend vom Verfahrensanbieter gespeichert (Schritt 28). Erfolgt hingegen keine kundenseitige Bestätigung, so wird der Kunde in Schritt 16 erneut aufgefordert, die Mobiltelefonnummer des mit einem Guthaben aufzuladenden Mobiltelefons zu übermitteln. Unterbleibt auch weiterhin eine Bestätigung, so erfolgt ein Abbruch (Schritt 29) unter Angabe von Gründen.

Nachdem die Mobiltelefonnummer in Schritt 26 bestätigt und in Schritt 28 gespeichert wurde, wird der Kunde vom Verfahrensanbieter aufgefordert, einen Betrag aus einer Reihe von Alternativen auszuwählen (Schritt 30). Der Aufforderung folgend wählt der Kunde einen Betrag aus (Schritt 32), der dann verfahrensanbieterseitig überprüft wird (Schritt 34). Ist beispielsweise der monatliche Betrag, der von ein und demselben Telefonanschluß aufgeladen werden kann, begrenzt, so kann die Überprüfung in Schritt 34 dazu führen, daß der durch den Kunden in Schritt 32 ausgewählte Betrag die maximale Obergrenze übersteigt, so daß der Kunde in Schritt 30 erneut dazu aufgefordert wird, einen geringeren Betrag auszuwählen. Ist die maximale Obergrenze bereits überschritten, so erfolgt ein Abbruch der Telefonverbindung (Schritt 36) unter Nennung der entsprechenden Gründe.

Wird in Schritt 34 festgestellt, daß verfahrensanbieterseitig keine Einwände gegen die in Schritt 32 ausgewählte Höhe des Betrags bestehen, so wird der in Schritt 32 ausgewählte Betrag dem Kunden in Schritt 38 wiederholt, der diesen in Schritt 40 bestätigt. Erfolgt keine kundenseitige Bestätigung, so springt die Sequenz zurück zu Schritt 30, woraufhin der Kunde erneut aufgefordert wird, einen Betrag auszuwählen.

Nach erfolgter Bestätigung des Betrags in Schritt 40 wird dieser verfahrensanbieterseitig in Schritt 42 gespeichert, woraufhin der Kunde über den erfolgreichen Abschluß informiert und die Telefonverbindung abgebrochen wird (Schritt 44).

Schließlich wird vom Verfahrensanbieter die Transaktion durchgeführt (Schritt 46) und eine Transaktionsbestätigung an den Kunden versendet (Schritt 48). Letzteres kann beispielsweise via SMS erfolgen.

Die Zuordnung der Prepaid-Karte zu dem speziell für diese Prepaid-Karte eingerichteten Prepaid-Konto erfolgt bei der gerade beschriebenen Ausführungsform des erfindungsgemäßen Verfahrens über die Mobiltelefonnummer der Prepaid-SIM-Karte.

Bei einer alternativen Ausführungsform des erfindungsgemäßen Verfahrens, das zum Aufladen eines einer Prepaid-Karte zugeordneten Telefonguthabens, der kein spezielles Prepaid-Konto zugeordnet ist, oder zum Aufladen eines einer Calling-Karte zugeordneten Telefonguthabens dient, wird der Kunde verfahrensanbieterseitig in Schritt 16 dazu aufgefordert, dem Verfahrensanbieter eine Telefonnummer zu übermitteln, an die eine Bestätigungsmeldung, beispielsweise via SMS, versendet werden soll, die eine Codenummer enthält, mit der das aufgeladene Guthaben kundenseitig freigeschaltet werden kann. In Schritt 18 wird diese Telefonnummer dann übermittelt. Schritt 20 entfällt. In Schritt 24 wird die Telefonnummer verfahrensanbieterseitig wiederholt und der Kunde aufgefordert, die wiederholte Telefonnummer zu bestätigen. Die Bestätigung erfolgt dann in Schritt 26, woraufhin die Telefonnummer schließlich in Schritt 28 gespeichert wird. Zusammen mit der Transaktionsbestätigung in Schritt 48 wird dann die Codenummer übermittelt, mit der der Kunde den ausgewählten Betrag freischalten kann. Eine Zuordnung der Prepaid- bzw. Calling-Karte zu dem aufgeladenen Betrag erfolgt hier also über die Codenummer, die verfahrensanbieterseitig an den Kunden übermittelt wurde.

Bei den zuvor beschriebenen Ausführungsformen kann der Kunde zunächst auch nach Schritt 10 mit einem vom Verfahrensanbieter eingerichteten Callcenter verbunden werden, der die Kundendaten aufnimmt und überprüft. Sollte die Überprüfung ergeben, daß keine Einwände gegen die Benutzung des erfindungsgemäßen Verfahrens durch den anrufenden Kunden bestehen, so wird dieser bei seinem nächsten Anruf direkt an die Guthabenaufladerufnummer des Verfahrensanbieters weitergeleitet. Ist die Überprüfung hingegen negativ, so wird der Kunde von der Nutzung des Verfahrens ausgeschlossen.

Es sollte klar sein, daß die zuvor beschriebene beispielhafte Ausgestaltung des erfindungsgemäßen Verfahrens nicht einschränkend ist und daß Modifikationen und Änderungen vorgenommen werden können, ohne den Schutzbereich der vorliegenden Erfindung zu verlassen, der durch die beiliegenden Ansprüche definiert ist.

## Patentansprüche

1. Verfahren zum Aufladen eines Telefonguthabens, das folgende Schritte aufweist:
- Kundenseitiges Wählen einer vorbestimmten Rufnummer eines Verfahrensanbieters,
- verfahrensanbieterseitiges Identifizieren des Telefonanschlusses, von dem aus der Kunde anruft,
- verfahrensanbieterseitiges Identifizieren des Telefonanschlusses zumindest bei einem erstmaligen Anruf des Kunden beim Verfahrensanbieter,
- Auswahl eines aufzuladenden Betrags durch den Kunden,
- Abrechnen des ausgewählten Betrags über den Netzbetreiber des identifizierten Telefonanschlusses, wobei der Rechnungsbetrag dem Inhaber des Telefonanschlusses in Rechnung gestellt wird, und
- Bereitstellen des kundenseitig ausgewählten Betrags.

2. Verfahren nach Anspruch 1, bei dem der identifizierte Telefonanschluß dem Überprüfungsergebnis zugeordnet und diese Zuordnung gespeichert wird.

3. Verfahren nach einem der vorhergehenden Ansprüche, bei dem eine erneute Überprüfung des Telefonanschlusses bei Abrechnungsproblemen stattfindet.

4. Verfahren nach Anspruch 3, bei dem bei Abrechnungsproblemen der entsprechende Telefonanschluß zeitweise oder ganz von der Durchführung des Verfahrens ausgeschlossen wird.

5. Verfahren nach Anspruch 4, bei dem die zwischen dem Kunden und dem Verfahrensanbieter aufgebaute Telefonverbindung automatisch getrennt wird, sobald verfahrensanbieterseitig ein von der Durchführung des Verfahrens ausgeschlossener Telefonanschluß identifiziert wird.

6. Verfahren nach einem der vorhergehenden Ansprüche, bei dem Rufnummernblöcke des verfahrensanbieterseitig identifizierten Telefonanschlusses identifiziert und gespeichert werden.

7. Verfahren nach einem der vorhergehenden Ansprüche, bei dem eine kundenseitige Bestätigung des vom Kunden ausgewählten Betrags erfolgt.

8. Verfahren nach einem der vorhergehenden Ansprüche, bei dem die Höhe des pro Anruf aufladbaren Betrags und/oder des über eine vorbestimmte Zeitspanne aufladbaren Betrags begrenzt ist.

9. Verfahren nach einem der vorhergehenden Ansprüche, bei dem ein identifizierter Telefonanschluß nach einer vorbestimmten Anzahl von nicht erfolgten Buchungen zeitweise oder ganz von der Durchführung des Verfahrens ausgeschlossen wird.

10. Verfahren nach einem der vorhergehenden Ansprüche, bei dem ein Betrag für eine Calling-Karte bereitgestellt wird.

11. Verfahren nach Anspruch 10, bei dem dem Kunden vom Verfahrensanbieter eine Codenummer übermittelt wird, mit der der Kunde den bereitgestellten Betrag freischalten kann.

12. Verfahren nach einem der Ansprüche 1 bis 9, bei dem ein Betrag für eine Prepaid-Karte bereitgestellt wird.

13. Verfahren nach Anspruch 12, bei dem dem Kunden vom Verfahrensanbieter eine Codenummer übermittelt wird, mit der der Kunde das bereitgestellte Guthaben freischalten kann.

14. Verfahren nach Anspruch 12, bei dem beim Verfahrensanbieter ein Betrag auf einem einer Prepaid-SIM-Karte zugeordneten Prepaid-Konto bereitgestellt wird.
